# EUROPEAN PATENT APPLICATION

(11) **EP 1 090 881 A1**
(43) Date of publication of application: **11.04.2001**
(21) Application number: 00121292.7
(22) Date of filing: 06.10.2000
(51) Int. Cl.: C01B 31/08

(54) **Coal-based molded activated carbon and process for the treatment of waste gas containing dioxins using same**

(30) Priority: 06.10.1999 JP 28537899
(71) Applicant: Mitsubishi Chemical Corporation, Chiyoda-ku, Tokyo (JP)
(72) Inventor: Suzuki, Mitsuo, Mitsubishi Chemical Corporation, Yokohama-shi, Kanagawa (JP)
(74) Representative: VOSSIUS & PARTNER

(57) **Abstract**

A tough molded activated carbon, which can withstand the repetition of adsorption/decomposition of dioxins, is a coal-based molded activated carbon having a Ca content of 0.2 wt% or less and being capable of adsorbing dioxins is used.

## Description

The present invention relates to a molded activated carbon capable of efficiently removing dioxins from a waste gas and a process for the treatment of a waste gas containing dioxins using the molded activated carbon.

A waste gas produced by the combustion of city refuse or industrial wastes contains harmful substances, including acidic gases such as hydrogen chloride and sulfur oxide and heavy metals such as mercury, as well as dioxins, which are deadly poisonous. How the discharged amount of dioxins can be reduced has been a global assignment. The mechanism of reaction of production of dioxins in the combustion process is complicated and has not yet been made clear. It is thought that precursor materials produced by the combustion of wastes containing chlorine undergo resynthesis reaction in the waste gas cooling process to produce dioxins. As the most effective method for the removal of dioxins thus produced there may be used a method involving the removal of dioxins with an activated carbon. Such a treatment method with an activated carbon is advantageous in that it can remove dioxins as well as many other harmful materials such as mercury.

The method for the treatment of a waste gas with an activated carbon can be roughly divided into two main methods, i.e., (1) a method which comprises spraying a powdered activated,carbon onto a flue, and then collecting the activated carbon having harmful materials adsorbed thereto together with scattered ash using a dust collector and (2) a method which involves the adsorption and removal of harmful materials using a separately provided adsorption tower filled with an activated carbon in the form of e.g. grains installed downstream from the dust collector. The former method can use the same apparatus as slaked lime powder sprayer used to remove an acidic gas such as hydrochloric acid and sulfur oxide in ordinary incineration plant and thus requires no large-scale facility remodeling construction. Because of this advantage in facilities, this method has been introduced into many existing incineration facilities. The latter method using an adsorption tower requires a large-scale apparatus and hence a raised facility cost. However, this method attains a higher percent of removal of dioxins than the blowing method and thus can invariably keep the concentration of dioxins at a low level. Further, the adsorption tower used in this method acts as a desulfurization/denitration catalyst as well. Moreover, this method is likely to remove undiscovered and unknown harmful materials. Thus, from the environmental standpoint of view, this method is considered to be a very effective method. Accordingly, taking into account the future environmental issue, it is necessary that a technique for putting the latter method in practical use be established.

In the latter method, the activated carbon which has been used in the adsorption in the packed column needs to be regenerated. It is essential in this regeneration process that dioxins thus adsorbed be securely decomposed and the molded activated carbon be recovered in recyclable form. For this regeneration process, various methods have been proposed such as a method which comprises putting the activated carbon into an incinerator, a method involving regeneration with water vapor and a method which comprises heating the activated carbon under deficiency of oxygen so that it is re-used (JP-A-64-500330 and JP-A-5-301022). In particular, the method which comprises heating the activated carbon having dioxins adsorbed thereto under deficiency of oxygen so that dioxins are heat-decomposed at low temperatures to regenerate the activated carbon allows regeneration at a relatively low temperature and thus has been noted as an economically effective method.

Further, JP-A-11-104488 proposes a granular recyclable dioxin adsorption/decomposition activated carbon. Activated carbons are divided into two groups, i.e., coconut shell-based activated carbon and coal-based activated carbon. Since the activated carbon to be used for the treatment of a large amount of a waste gas must be inexpensive, it is natural that coal-based activated carbon should be used. However, coal-based molded activated carbon is disadvantageous in that when used repeatedly for adsorption/decomposition of dioxins in the treatment of a waste gas, it undergoes cracking and pulverization. Once pulverized, the activated carbon exhibits a deteriorated adsorptivity that prevents fair treatment of waste gas.

Therefore, a tough recyclable molded activated carbon which can withstand the repetition of adsorption/decomposition of dioxins has been desired.

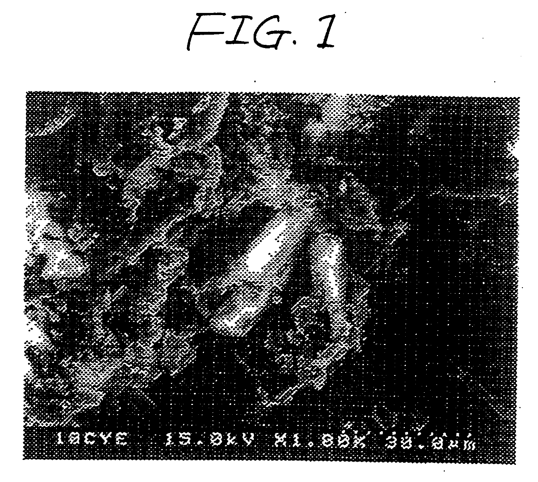

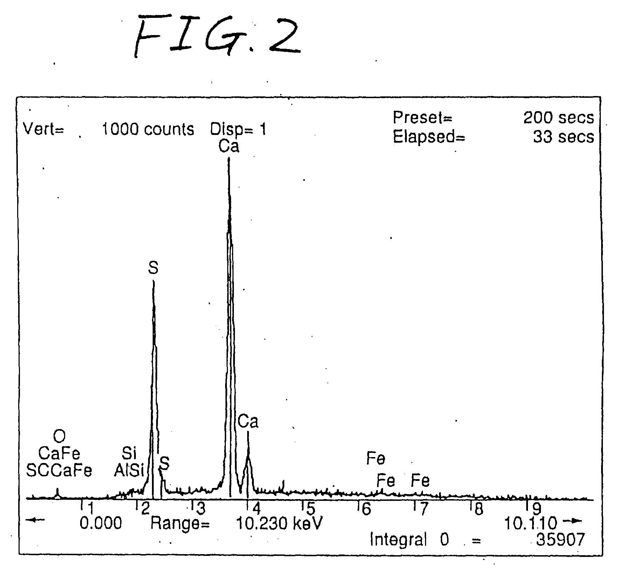

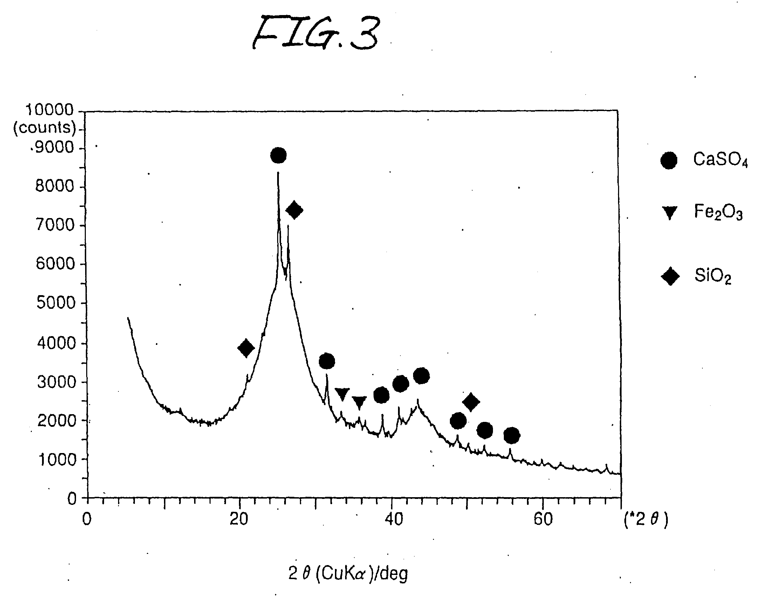

Under these circumstances, the inventors made SEM-EDX analysis and powder X-ray diffractometry on the cracked portion of a cracked activated carbon to make clear the mechanism of occurrence of cracking on molded activated carbon. As a result, it was found that a columnar crystal having a diameter of few micrometers and scores of micrometers occurs at the cracking site as shown in Fig. 1. EDX analysis (Fig. 2) shows that this crystal is a compound containing Ca and S. The cracked portion was then scraped to give a specimen. The specimen was then subjected to powder X-ray diffractometry (Fig. 3). As a result, it was found that the crystal containing Ca and S is CaSO₄. Accordingly, this demonstrates that cracking occurs according to the mechanism that at the step of heating the molded activated carbon to cause heat decomposition of dioxins at low temperatures Ca in ash content scattered in the activated carbon reacts with SOx in the waste gas adsorbed by the activated carbon to cause CaSO₄ to grow in the form of columnar crystal, thereby causing an increase of volume that leads to cracking. Then, the inventors found that an activated carbon having a Ca content low enough to inhibit the crystal growth of CaSO₄, which causes cracking, is desirable as a recyclable dioxin adsorption/decomposition activated carbon.

In other words, the essence of the present invention lies in a coal-based molded activated carbon having a Ca content of 0.2 wt% or less being capable of adsorbing dioxins and a process for the treatment of a waste gas using this coal-based molded activated carbon.

For the adsorption of dioxins, various activated carbons have heretofore been used. These activated carbons have different Ca contents. Coal-based molded activated carbons which are generally used have a Ca content of about 0.6 wt%.
Fig. 1 is SEM photograph illustrating the cracked portion of the cracked activated carbon of Comparative Example 1.
Fig. 2 is a chart illustrating SEM-EDX analysis of the cracked portion of the cracked activated carbon of Comparative Example 1.
Fig. 3 is a chart illustrating powder X-ray diffractometry of the cracked portion of the cracked activated carbon of Comparative Example 1.

The coal-based molded activated carbon according to the present invention needs to be capable of adsorbing dioxins. As the activated carbon there is preferably used one having pores with a pore diameter of from 10Å to 20 Å, normally having a pore volume of 0.01 cc/g or more, preferably 0.03 cc/g or more. The activated carbon according to the invention normally has a specific surface area of from 300 m²/g or more, preferably 400 m²/g or more, to 2,000 m²/g or less, preferably 1,500 m²/g or less. When the specific surface area of the activated carbon is too small, the activated carbon exhibits a deteriorated dioxin adsorptivity. On the contrary, when the specific surface area of the activated carbon is too great, the resulting molded activated carbon exhibits a deteriorated strength to disadvantage.

It is essential that the molded activated carbon according to the invention should be prepared from a coal-based raw material because of quality and price of product and stable availability in a large amount. By molding this raw material charcoal in powder form into a predetermined shape and size, and then subjecting the molded product to carbonization and activation, a molded activated carbon can be obtained. The molding of the raw material charcoal is normally carried out by consolidation molding free from binder. If necessary, a small amount of a binder may be added. As such a binder there may be normally used a tar-based adhesive. The molding may be optionally effected after activation. The carbonization is effected at a temperature of from 500°C to 900°C according to normal process. In some detail, the material is heated and carbonized so that carbon-based organic materials are decomposed and carbonized. Activation is roughly divided into two groups, i.e., activation with gas and activation with chemical. In the present invention, activated carbon obtained by activation with gas is desirable. Activation with gas is called physical activation while activation with chemical is called chemical activation. Activation with gas involves the catalytic reaction of a carbonized raw material with water vapor, carbon dioxide gas, oxygen or other oxidizing gas at an elevated temperature resulting in the production of a microporous adsorbent charcoal. Activation with water vapor is mainly used on an industrial basis. Activation with chemical comprises heating a raw material uniformly impregnated with an activating chemical in an inert gas atmosphere to cause dehydration and oxidation reaction of the chemical resulting in the production of a microporous adsorbent charcoal. Examples of the chemical employable herein include zinc chloride, phosphoric acid, sodium phosphate, calcium chloride, potassium sulfite, potassium hydroxide, sodium hydroxide, potassium carbonate, sodium carbonate, sodium sulfate, potassium sulfate, and calcium carbonate.

The molded activated carbon according to the invention is normally in the form of columns, grains or discs.

The size of the molded activated carbon according to the invention may be normally arbitrary so far as it is acceptable as filler to be packed in a packed column. For example, if the activated carbon is in the form of column, the average diameter is normally from 3 mm or more, preferably 4 mm or more, to 10 mm or less, preferably 9 mm or less, and the average length is normally from 3 mm or more, preferably 4 mm or more, to 30 mm or less, preferably 20 mm or less. If the activated carbon is in the form of grains, the average grain diameter is normally from 3 mm or more, preferably 4 mm or more, to 10 mm or less, preferably 9 mm or less. When the activated carbon is too small, the pressure loss in the packed column may be increased. On the contrary, when the activated carbon is too large, the contact area of the waste gas with the particulate activated carbon decreases, occasionally deteriorating the adsorptivity.

The molded activated carbon according to the invention is normally packed in a column before use. Therefore, the molded activated carbon according to the invention preferably has a strength high enough to maintain its shape without being pulverized during packing or withdrawal.

In the present invention, it is essential that as the foregoing coal-based molded activated carbon there be used one having a Ca content of 0.2 wt% or less, preferably 0.15 wt% or less. In other words, when the content of Ca is too great, the resulting molded activated carbon can crack and undergo pulverization during recycling, resulting in troubles with treatment of waste gas such as increase of pressure loss in the packed column and scattering of fine powder. Further, dioxins cannot be efficiently removed. However, the use of a molded activated carbon having a Ca content of not more than the above defined value makes it possible to continue fair removal of dioxins. The content of Ca can be measured, e.g., by wet decomposition ICP-AES.

The molded activated carbon according to the invention has an ash content of normally 9 wt% or less, preferably 8 wt% or less.

As the process for the production of the activated carbon having a low Ca content there may be used a process involving the washing of a coal-based molded activated carbon having a Ca content of about 0.6 wt% with an aqueous solution of an acid. Examples of the acid employable herein include inorganic acids such as hydrochloric acid, nitric acid, sulfuric acid and hydrofluoric acid. Preferred among these inorganic acids is hydrochloric acid. The activated carbon thus acid-washed is preferably then washed with water to remove the acid.

The coal-based molded activated carbon according to the invention is used as an adsorbent for various waste gases containing dioxins. The coal-based molded activated carbon according to the invention exerts its effect remarkably when used in a waste gas treatment apparatus which operates by a process involving the repetition (e.g., 10 times or more) of cycle consisting of adsorption and regeneration. The waste gas treatment apparatus which operates by recycling activated carbon is a treatment apparatus which operates by a process involving a step of allowing an activated carbon to adsorb substances from a waste gas and a step of separating the substances from the activated carbon and decomposing the substances thus separated. A representative example of such a treatment apparatus is one proposed in JP-A-11-104488. An apparatus which operates by a process involving the adsorption step and the separation and decomposition step which are switched in the same system, too, corresponds to the recycle type waste gas treatment apparatus of the invention.

The waste gas to be treated in the present invention is normally a gas containing dioxins. The waste gas has a dioxin concentration of normally from 100 to 0.1 ng-TEQ/Nm³. While such a waste gas generally contains a SO₂ gas, the waste gas normally has an SO₂ concentration of from 1 to 3,000 ppm. The waste gas may not necessarily contain SO₂. When the waste gas contains SO₂, the activated carbon used is liable to problems such as cracking and pulverization. Thus, the molded activated carbon according to the invention can exert its effect remarkably when the waste gas to be treated contains SO₂.

The shape and type of the adsorption tower to be used in the treatment of combustion gas are not specifically limited. In practice, however, the adsorption tower to be used herein may be of AE&E type, WKV type or the type proposed in JP-A-7-763. The temperature of the adsorption tower is normally from 70°C or more, preferably 100°C or more, to 200°C or less, preferably 180°C or less. The molded activated carbon according to the invention can be used in any type of adsorption tower such as fluidized bed type adsorption tower and fixed bed type adsorption tower.

On the other hand, the decomposition of dioxins can be carried out, e.g., by a process which comprises heating dioxins normally to a temperature of from 350°C or more, preferably 400°C or more, to 550°C or less, preferably 500°C or less, in a reaction tank filled with an activated carbon under the deficiency of oxygen, preferably in the presence of oxygen in an amount of 1% or less. The decomposition of dioxins makes it possible to re-use the activated carbon.

The use of the molded activated carbon according to the invention makes it possible to prevent the pulverization of the molded activated carbon even after repetition of adsorption of dioxins from the waste gas and decomposition of dioxins thus adsorbed and hence continue fair treatment of the waste gas.

The present invention will be further described in the following example and comparative example, but the present invention should not be construed as being limited thereto so far as these examples fall within the scope of the invention.

### EXAMPLE 1

Coal as a starting material was subjected to activation with water vapor to produce a columnar activated carbon having an average diameter of 4 mm and an average length of 5 mm. The columnar activated carbon thus produced was then washed with hydrochloric acid to obtain a molded activated carbon having a low Ca content. The columnar activated carbon thus obtained was then measured for specific surface area, ash content and Ca content and subjected to adsorption/decomposition cycle test with an imitation gas.

For the measurement of specific surface area, nitrogen adsorption was effected using a Type Soaptomatic 1800 measuring instrument produced by Carlo Erba Strumentezione. BET process was used to calculate specific surface area. The specific surface area thus determined was 1,100 m²/g.

The measurement of ash content was carried out by the following method. In some detail, into a porcelain crucible was charged from 1 g to 2 g of an activated carbon sample. The sample was then heated to a temperature of 815°C in the air for 6 hours. The sample was then allowed to cool. The weight of the residual ash content was then measured. The percentage of the weight of the ash content based on the weight of the activated carbon charged was then determined. From this percentage was calculated ash content. The ash content thus determined was 7.5 wt%.

For the measurement of Ca content, a wet decomposition ICP-AES (apparatus: JY38S, produced by JOBIN YVON INC.) was used. The Ca content thus determined was 0.11 wt%.

The adsorption/decomposition cycle test with an imitation gas was effected under the following conditions. The occurrence of cracking on the columnar activated carbon was visually confirmed.

In some detail, the sample was subjected to adsorption at a temperature of 90°C in an imitation combustion gas having an SO₂ content of 1,050 ppm, an H₂O content of 10% and an O₂ content of 15% and comprising N₂ as a base gas for 40 hours. The sample was then heated to a temperature of 450°C in N₂ gas in 3 hours. The sample was then kept at a temperature of 450°C for 2 hours to undergo separation. These steps constitutes a cycle. This cycle was repeated 10 times. As a result, little or no cracks occurred on the columnar activated carbon.

### COMPARATIVE EXAMPLE 1

Coal as a starting material was subjected to activation with water vapor to produce a columnar activated carbon having an average diameter of 4 mm and an average length of 5 mm. The columnar activated carbon thus obtained was then measured for physical properties in the same manner as in Example 1. As a result, the specific surface area was 1,090 m²/g, the ash content was 9.2 wt%, and the Ca content was 0.61 wt%. The columnar activated carbon was then subjected to cycle test. At the 10th cycle, the sample was examined to see if it underwent cracking. As a result, 80% of the grains was observed to have cracks.

As can be seen in the foregoing example and comparative example, when an activated carbon having a Ca content of 0.2 wt% or less is used as a recyclable dioxin adsorption/decomposition activated carbon for apparatus for the treatment of combustion gas containing SO₂, the grains constituting the activated carbon are less liable to cracking, enabling the repetition of adsorption/decomposition of dioxins over an extended period of time.

In accordance with the present invention, a coal-based molded activated carbon which can withstand the repetition of adsorption/decomposition of dioxins can be provided. Accordingly, the process for the treatment of a waste gas using this coal-based molded activated carbon allows stable adsorption and removal of dioxins from a waste gas over an extended period of time.

## Claims

1. A coal-based molded activated carbon having a Ca content of 0.2 wt% or less and being capable of adsorbing dioxins.

2. The molded activated carbon according to Claim 1, which has a specific surface area of 300 m²/g to 2,000 m²/g.

3. The molded activated carbon according to Claim 1, which has a pore volume of 0.01 cc/g or more.

4. The molded activated carbon according to any one of Claims 1 to 3, which has a column shape having an average diameter of from 3 mm to 10 mm and an average length of from 3 mm to 30 mm.

5. The molded activated carbon according to any one of Claims 1 to 3, which has a granular shape having an average diameter of from 3 mm to 10 mm.

6. The molded activated carbon according to any one of Claims 1 to 5, which has an ash content of 9 wt% or less.

7. The molded activated carbon according to any one of Claims 1 to 6, which has a Ca content of 0.15 wt% or less.

8. The molded activated carbon according to any one of Claims 1 to 7, which is obtained by a process which comprises molding a coal powder as a raw material, subjecting the molded powder to carbonization and activation to produce a molded activated carbon, and washing the molded activated carbon with an aqueous solution of an acid.

9. The molded activated carbon according to any one of Claims 1 to 8, which is for use in the adsorption of waste gas containing dioxins.

10. The molded activated carbon according to any one of Claims 1 to 9, which is for use in a waste gas treatment system which comprises: allowing an activated carbon to adsorb a waste gas containing dioxins; and subjecting the activated carbon used for the adsorption to decomposition of dioxins at a temperature of from 350°C to 550°C under deficiency of oxygen.

11. A process for the treatment of a waste gas containing dioxins, which comprises: allowing an activated carbon to adsorb a waste gas containing dioxins; heating the activated carbon used for the adsorption to decompose dioxins and regenerate the activated carbon; and re-using the activated carbon thus regenerated, wherein a coal-based molded activated carbon having a Ca content of 0.2 wt% or less and being capable of adsorbing dioxins is used as the activated carbon.

12. The process for the treatment of a waste gas according to Claim 11, wherein the adsorption of dioxins in the waste gas is effected at a temperature of from 70°C to 200°C.

13. The process for the treatment of a waste gas according to Claim 11, wherein the heat decomposition of dioxins in the activated carbon used for adsorption is effected at a temperature of from 350°C to 550°C under deficiency of oxygen.
